# EUROPÄISCHE PATENTSCHRIFT

(11) **EP 0 450 414 B1**
(45) Veröffentlichungstag und Bekanntmachung des Hinweises auf die Patenterteilung: **15.03.1995**
(21) Anmeldenummer: 91104400.6
(22) Anmeldetag: 21.03.1991
(51) Int. Cl.: A62B 23/02, A62D 9/00, B01J 20/04, C01G 39/02, C01G 41/02

(54) **Imprägnierung für Atemschutzfilter mit Aktivkohle**
Impregnation for breathing protection filter with active carbon
Imprégnation pour filtre de protection respiratoire à charbon actif

(30) Priorität: 06.04.1990 DE 4011221
(43) Veröffentlichungstag der Anmeldung: 09.10.1991
(73) Patentinhaber: Drägerwerk Aktiengesellschaft, 23542 Lübeck (DE)
(72) Erfinder: von der Smissen, Carl Ernst, Dr., W-2400 Lübeck (DE)

(56) Entgegenhaltungen:
- FR-A- 2 389 381
- GB-A- 293 962
- US-A- 2 523 875
- US-A- 2 920 051
- US-A- 4 801 311

## Beschreibung

Die Erfindung betrifft eine Imprägnierung für Atemschutzfilter mit Aktivkohle gemäß dem Oberbegriff des Patentanspruchs 1.

Sorptionsmassen zur chemischen Bindung von schädlichen Gasen sind aus der DE-OS 38 05 407 bekanntgeworden. Sie dienen zur Reinigung der Atemluft in unterschiedlicher Weise und werden z.B. in von Personen getragenen Atemschutzfiltern oder in Filtern von Lüftungsanlagen verwendet. Diese Sorptionsmassen bestehen beispielsweise aus Aktivkohle als Träger, die mit einer Imprägnierung aus Kupferoxid und Alkalichromat versehen ist.
Zusätzlich können auch Zinkverbindungen in Form von Zinkoxid in der Imprägnierung enthalten sein. Es sind auch Sorptionsmassen bekannt, die anstelle von Chromaten Vanadate enthalten. Werden z.B. Kupfercarbonat und Alkalivanadat zusammen auf Aktivkohle aufgebracht und vorsichtig erhitzt, wird das Kupfercarbonat ganz oder teilweise zersetzt und eine sehrwirkungsvolle Imprägnierung zur Bindung von sauren Gasen gebildet. Anstelle von Kupfercarbonat können auch Kupferoxid oder Zinkoxid verwendet werden, die Kupferoxid-Alkalivanadat und Zinkoxid-Alkalivanadat Imprägnierungen ergeben. Zur Erweiterung des Anwendungsbereichs der Sorptionsmasse auf die Bindung von Ammoniak kann noch Zinkchlorid hinzugefügt werden.

Ein derart imprägniertes Filter erfüllt die Leistungsanforderungen der DIN 3181 für Filter des Typs B gegen saure Gase und K gegen Ammoniak.

Bei den bekannten Sorptionsmassen ist es von Nachteil, daß chromhaltige Imprägnierungen die Lagerfähigkeit beeinträchtigen und die Filter daher überdimensioniert werden müssen, um auch nach der Lagerung noch eine ausreichende Schutzwirkung aufzuweisen. Hierdurch werden die Filter unhandlich, was insbesondere bei Fluchtgeräten nachteilig ist.

Aus der US 2,920,051 und der US 4,801,311 sind Imprägnierungen für Aktivkohle bekannt, die neben Ammoniummolybdat und Kupfercarbonat als weiteren Imprägnierungsbestandteil eine organische Säure, im vorliegenden Fall Weinsäure, enthalten. Der organische Imprägnierungsbestandteil wirkt sich zwar günstig auf die Schutzwirkung gegenüber bestimmten sauren Gasen aus, verringert jedoch das Adsorptionsvermögen von organischen Schadstoffen.

Der Erfindung liegt die Aufgabe zugrunde, ein Atemschutzfilter hinsichtlich seiner Lagerfähigkeit und Schutzleistung zu verbessern.

Die Aufgabe wird mit den kennzeichnenden Merkmalen des Patentanspruchs 1 gelöst.

Durch unterschiedliche Verwendung von Alkalisalzen von Oxosäuren, läßt sich die Wirksamkeit der Imprägnierung den spezifischen Erfordernissen anpassen und die Schutzleistung auf bestimmte Gase abstimmen.

Eine Imprägnierung nach dem Unteranspruch 4 ergibt eine erhebliche Erhöhung der Schutzleistung gegen Ammoniak.

Die Herstellung einer Sorptionsmasse nach der Erfindung sei an einem Beispiel erläutert:
1 kg Aktivkohle wird im Vakuumtaumeltrockner bei 60°C getrocknet. Dann wird eine ammoniakalische Lösung von 40g basischem Kupfercarbonat, 40 g Zinkcarbonat und 50 g Natriummolybdat unter einem Innendruck des Taumeltrockners von 100 mbar auf die Kohle gesprüht. 30 Minuten nach Beendigung des Aufsprühens wird die Temperatur des Taumeltrockners auf 100°C erhöht und der Innendruck auf 10 mbar erniedrigt. Unter diesen Bedingungen wird die Kohle im Taumeltrockner weitere 60 Minuten umgewälzt. Danach wird die Temperatur auf 140°C erhöht unter voller Pumpleistung der Vakuumpumpe, bis kein Ammoniakgeruch in der Abluft mehr auftritt. Nach dem Abkühlen kann die imprägnierte Aktivkohle zur Füllung von Atemschutzfiltern verwendet werden.

Ein derart gefülltes Filter üblicher Größe weist eine gute Aufnahmekapazität für Blausäure und Chlorzyan auf und erfüllt alle Leistungsanforderungen der DIN 3181 für Filter des Typs B. Die Imprägnierung weist auch nach längerer Lagerung noch ihre anfängliche Sorptionsleistung auf.

## Patentansprüche

1. Imprägnierung für ein Atemschutzfilter mit Aktivkohle, enthaltend zumindestens zwei Verbindungen von Kupfer und Zink und einen Zusatz eines Alkalisalzes einer Oxosäure, dadurch gekennzeichnet, daß der Zusatz Wolfram oder Molybdän enthält, und daß die Verbindungen als Vanadat, Oxid, Carbonat oder Chlorid vorliegen.

2. Imprägnierung nach Anspruch 1, dadurch gekennzeichnet, daß Wolfram als Alkaliwolframat vorliegt.

3. Imprägnierung nach Anspruch 1, dadurch gekennzeichnet, daß Molybdän als Natriummolybdat vorliegt.

4. Imprägnierung nach einem der Ansprüche 1 bis 3, daß als weiterer Zusatz Eisenverbindungen in Form von Chlorid, Bromid oder Iodid vorliegen.

## Claims

1. Impregnation for a protective respiratory filter with active carbon, containing at least two compounds of copper and zinc and an additive of an alkali salt of an oxyacid, characterised in that the additive contains tungsten or molybdenum and in that the compounds are present as vanadate, oxide, carbonate or chloride.

2. Impregnation according to claim 1, characterised in that tungsten is present as alkali tungstate.

3. Impregnation according to claim 1, characterised in that molybdenum is present as sodium molybdate.

4. Impregnation according to one of the claims 1 to 3, characterised in that iron compounds in the form of chloride, bromide or iodide are present as a further additive.

## Revendications

1. Imprégnation pour un filtre de protection respiratoire à charbon actif, contenant au moins deux composés de cuivre et de zinc et comme produit d'addition un sel alcalin d'oxacide, caractérisée en ce que le produit d'addition contient du tungstène ou du molybdène et en ce que les composés se présentent sous la forme de vanadate, d'oxyde, de carbonate ou de chlorure.

2. Imprégnation selon la revendication 1, caractérisée en ce que le tungstène se trouve sous la forme de tungstate alcalin.

3. Imprégnation selon la revendication 1, caractérisée en ce que le molybdène se trouve sous la forme de molybdate de sodium.

4. Imprégnation selon l'une des revendications 1 à 3, caractérisée en ce que, comme autres produits d'addition, on a des composés du fer sous la forme de chlorure, de bromure ou d'iodure.
